# EUROPEAN PATENT APPLICATION

(11) **EP 0 657 826 A1**
(43) Date of publication of application: **14.06.1995**
(21) Application number: 94305352.0
(22) Date of filing: 20.07.1994
(51) Int. Cl.: G06F 15/16, G06F 9/38, G06F 9/445

(54) **Interprocessor boot-up handshake for upgrade identification**

(30) Priority: 08.12.1993 US 163932
(71) Applicant: INTEL CORPORATION, Santa Clara, CA 95052 (US)
(72) Inventor: Ghori, Amar A., Sacramento, California 95762 (US); Golbert, Adalberto, Haifa, Israel 34862 (IL); Krick, Robert F., Beaverton, Oregon 97007 (US)
(74) Representative: Wombwell, Francis

(57) **Abstract**

A traditional uniprocessing computer system is provided with an upgrade socket for receiving an additional processor integrated circuit that need not be of a single predetermined type. On system RESET, the original CPU receives an UPGRADE_ID from the upgrade socket and determines if an agent is resident in the socket and if so what kind of agent is present. Each upgrade processor is equipped with a programmed data word with information indicating its parameters. The system then initializes properly according to the configuration of processors present.

## Description

### BACKGROUND OF THE INVENTION

### 1. Field of the Invention

The present invention relates to the field of computer processing systems. More particularly, the present invention relates to the field of upgrading computer systems, particularly those employing microprocessors.

### 2. Art Background

Microprocessor based computer systems frequently employ printed circuit boards (PCBs) containing connectors or sockets which physically hold the microprocessor integrated circuit and provide electrical connections between the microprocessor and the remainder of the computer system via wirings etched in the PCB. These computer systems frequently rely on a single microprocessor to carry out all processing operations for the computer system. One drawback of the single processor computer system is that the single processor effectively creates a bottleneck in the system thus limiting the overall speed and power of the computer.

As computer users require greater and greater processing capabilities, the ability to upgrade to a faster processor or to add additional functions or features becomes more important. One solution that computer developers have embarked upon to increase the performance of computer systems is to provide for the sharing of processing duties. It is now possible to add a math coprocessor chip to many computer systems which takes on many of the mathematical tasks for the central processing unit (CPU). Other enhancements that have been developed are graphics processors which handle the processing of graphical information to free the CPU to perform other tasks. These types of upgrades work in conjunction with and at the behest of the single CPU.

Other enhancements for computer systems include the use of two or more central processing units in what is known as a multiprocessing environment. When multiple processing units are implemented, they divide the processing work up to increase the overall performance of the computer system. Conventional multiprocessing systems are much more expensive than uniprocessing systems because the hardware to support multiple processor can be very complicated and the protocols for implementing multiprocessing are complex.

In an effort to make low cost entry level computer systems economically accessible to the mass market, it has been necessary to design simple systems which can be readily upgraded simply by the addition of the various coprocessor chips described above. This will usually entail leaving on the PCB of the computer system several empty sockets which are coupled to the single CPU. Each of the empty sockets is designed for a dedicated type of processor and the CPU is equipped for dealing with each particular associated chip socket. For example, one socket might be dedicated for the optional addition of a math coprocessor while another socket might be for the use of a graphics coprocessor.

The present entry level computer systems with dedicated expansion sockets leave many things to be desired. The nature and type of upgrade supported by a system must be preconceived at the time of system manufacturing. Many pins from the central processing unit are required for accommodating a plurality of different types of upgrade processors. The insertion of a math coprocessor chip into a socket dedicated for the use of a graphical coprocessor will not work. Likewise, a math coprocessor chip may not be added to the expansion slot for a graphics coprocessor. Further, to date no provision has been made for the creation of a multiprocessing system merely by the addition of a new processor without the addition of other supporting hardware.

One method of upgrading a computer system to use a more advanced CPU is described in co-pending U.S. Patent Application, "*Method and Apparatus for Upgrading a Computer Processing System*," Serial No. 07/687,222, filed April 18, 1991 and assigned to the assignee of the present invention. That discloses providing a dedicated upgrade socket solely for receiving an upgrade CPU. When the upgrade CPU is present, a signal is propagated from the upgrade socket to the original CPU indicating "upgrade present". The original CPU then shuts itself down and the upgrade CPU operates the computer system as a single processor system.

The reason the upgrade sockets have had to be dedicated to the various types of upgrade processors is that there has been no way for the CPU to determine what kind of processor has been inserted into an adjacent upgrade socket. It would be desirable, and is therefore an object of the present invention, to provide flexibility in the use of upgrade processors in upgrade sockets found on newly designed computer PCBs.

### BRIEF SUMMARY OF THE INVENTION

From the foregoing, it can be seen that there is a need to provide improved flexibility in the entry level computer system market. It is therefore an object of the present invention to provide an improved method of upgrading computer processing systems.

Another object of the present invention is to provide an improved upgradable computer processing system.

It is further an object of the present invention to provide for the addition of an upgrade processor that need not be of a fixed type but is identifiable to the computer system's resident CPU.

Another object of the present invention is to allow newly designed/conceived upgrade processors to be supported in older computer systems.

It is another object of the present invention to provide for the addition of upgrade processors which can communicate their various parameters to the system's resident CPU.

These and other objects of the present invention are provided by supplying a traditional computer system with upgrade sockets for receiving additional processor integrated circuits that need not be of a single predetermined type. A means and method are implemented in which inserted upgrade processors communicate with the system's original CPU to identify the type of processor present in the upgrade socket and its various attributes. The system then properly boots-up taking into account the nature of upgrade present if any at all.

### BRIEF DESCRIPTION OF THE DRAWINGS

The objects, features and advantages of the present invention will be apparent from the following detailed description in which:
**Figure 1** shows a portion of a traditional microcomputer architecture in which a CPU and a memory subsystem communicate through a memory bus.
**Figure 2** shows a block layout of a computer system incorporating aspects of the present invention.
**Figure 3** shows a more detailed view of a CPU and an upgrade processor and the communications lines utilized in accordance with one embodiment of the present invention.
**Figure 4** illustrates a data word structure for upgrade processor identification in accordance with one embodiment of the present invention.
**Figure 5** illustrates a more detailed diagram of the circuitry required for exchanging processor identification information between an upgrade processor and resident processor.
**Figures 6(a)** and **6(b)** illustrate, respectively, flowcharts followed by the resident CPU and an upgrade processor in carrying out the present invention.

### DETAILED DESCRIPTION OF THE INVENTION

A method and apparatus are described for flexibly enhancing the processing power of microcomputers. The present invention proposes an interprocessor boot-up handshake for identifying upgrade processors to a resident central processing unit (CPU) to enhance the operational performance of the computer system. In the following detailed description, numerous specific details are set forth such as specific bit locations in data words and signal names, etc., in order to provide a thorough understanding of the present invention. It will be apparent, however, to one skilled in the art that the present invention may be practiced without such specific details. In other instances, well-known components, structures and techniques have not been shown in detail to avoid unnecessarily obscuring the subject matter of the present invention.

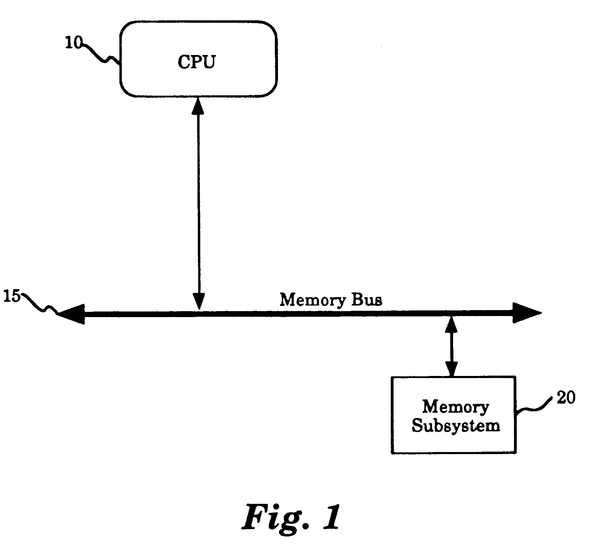

Referring first to **Figure 1**, a portion of a traditional microcomputer architecture is illustrated. In **Figure 1**, the processing power for the computer is identified as central processing unit (CPU) 10. A memory subsystem 20 is coupled to a memory bus 15. When the processing portion of the architecture requires data from the memory subsystem or needs to write data to the memory subsystem, necessary control signals and information are propagated along the memory bus 15. In addition to the CPU 10 and the memory subsystem 20 residing on the memory bus 15, other components of the computer system must utilize the memory bus for various operations. Only one computer component is generally capable of utilizing a memory bus at a given time so it is essential to minimize the memory bus utilization needs of the various components.

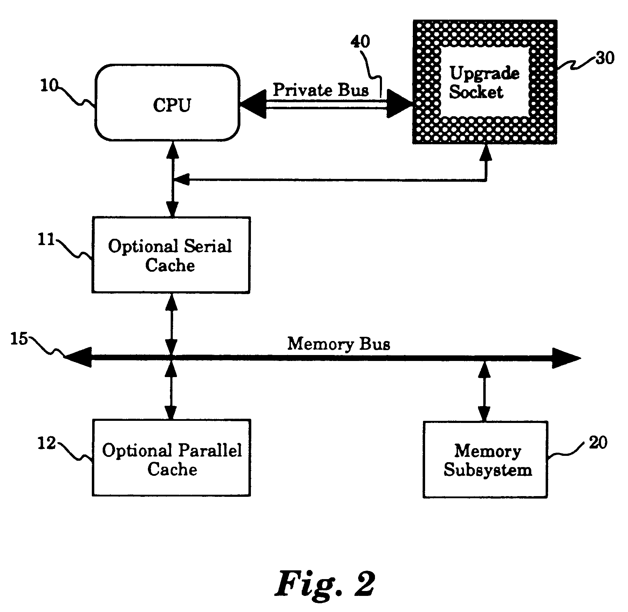

Referring now to **Figure 2**, a block diagram of a portion of a microcomputer architecture in accordance with the present invention is illustrated. In addition to the traditional microcomputer components from **Figure 1**, **Figure 2** provides for an upgrade socket 30. The upgrade socket is implemented such that it can accommodate the various coprocessors described above as well as an upgrade CPU. While only one upgrade socket is illustrated in **Figure 2**, more than one may be incorporated in accordance with the present invention. The upgrade socket 30 shares the same bus lines that couple CPU 10 directly or indirectly to the memory bus 15.

A private communications bus 40 is illustrated coupling CPU 10 and the upgrade socket 30 in **Figure 2**. This private communications bus may be used when an upgrade processor is a second CPU which is capable of operating in tandem with the CPU 10 to make the computer system a multiprocessing system. Co-pending U.S. Patent Application 08/065,597 entitled, "*Method and Apparatus for Operating a Single CPU Computer System as a Multiprocessor System*", filed May 21, 1993, and assigned to the assignee of the present invention describes in detail a method for implementing multiprocessing using CPU 10 and an appropriately configured upgrade CPU inserted in upgrade socket 30. In the present invention, the private communications bus 40 will be utilized for exchanging information between the CPU 10 and an upgrade processor in socket 30 for identifying the processor in the upgrade socket 30. The preferred embodiment implementation will utilize some of those lines disclosed in the above-referenced co-pending application so that the present invention will accommodate dual-processing when a multiprocessing-ready CPU is the identified processor in socket 30. Alternatively, in an implementation in which no private bus is provided, other communications lines such as a subset of signal lines of the memory bus may be used for implementing the boot-up handshake of the present invention.

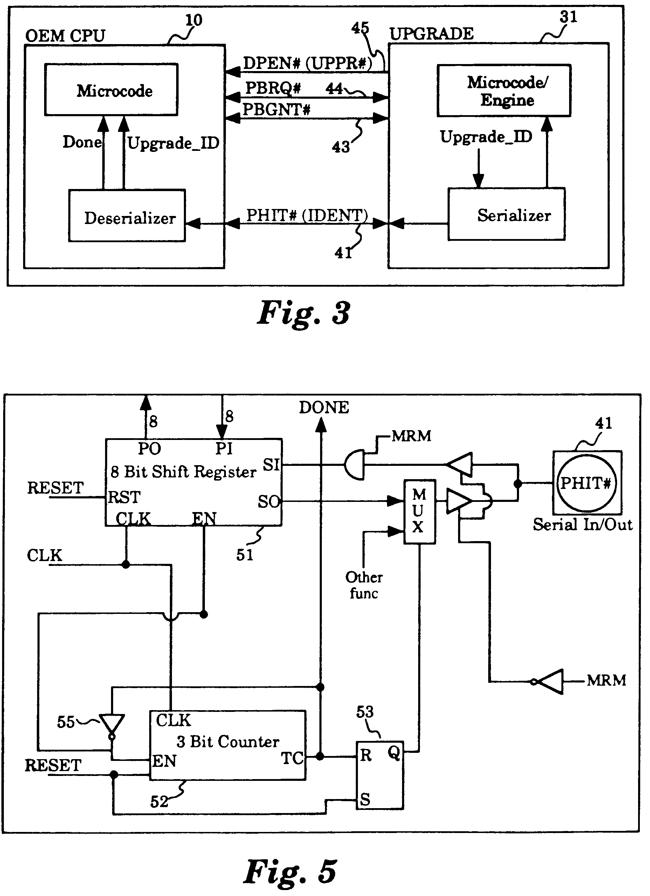

Referring now to **Figure 3** an OEM CPU 10 is shown in conjunction with an upgrade processor 31. The upgrade processor 31 resides in upgrade socket 30 not shown in **Figure 3**. A plurality of signal lines are shown coupling the two processors. In the preferred embodiment, these are a subset of the signal lines constituting the private bus 40, but may be other lines coupled through pins which are multiplexed for multiple purposes. These lines include the PHIT# line 41, PBGNT# line 43, and PBRQ# line **44**. In the event that the upgrade processor 31 is a multiprocessing-ready CPU, these lines will be utilized for operating processor 31 in tandem with the resident CPU 10 as described in co-pending U.S. Patent Application, "*Method and Apparatus for Operating a Single CPU Computer System as a Multiprocessor System*". These lines serve an alternate purpose during the system boot-up operation to be described further herein. The nomenclature used to identify particular signal lines should not be seen as limiting but are here used for illustrative purposes only.

Also shown in **Figure 3** is a signal line DPEN# (UPPR#) 45. This line is used to indicate the presence of an upgrade processor in upgrade socket 30. The OEM processor samples this line during the RESET falling clock edge. In the preferred embodiment, the upgrade processor 31 should drive this line to a "low" logic level during the RESET falling edge. If there is no upgrade processor present, the logic level of this line remains at its default "high" value. This may be done by means of an external resistor or by an internal pull-up with a dedicated pin.

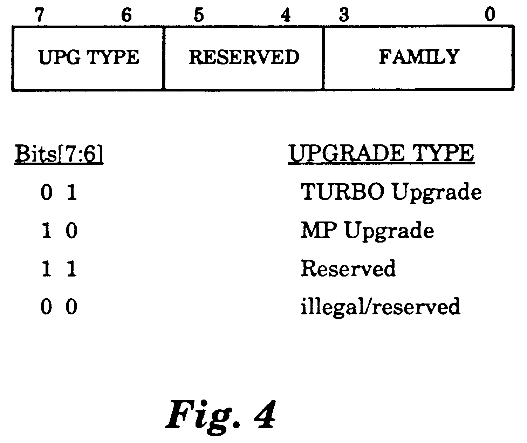

Each upgrade processor in accordance with the present invention must store a data word containing descriptive information about itself. **Figure 4** illustrates the data arrangement of the UPGRADE_ID data word in accordance with a preferred embodiment of the present invention. Therein, an 8-bit constant value is stored in the processor with information concerning the processor. Bits 0-3 contain family information about the processor which may be used in configuring the computer system operation after boot-up. For the purpose of the present invention, it is the two-bit field at bits 6 and 7 which determines processor operation during system initialization. In the preferred embodiment of the present invention two bits are sufficient because it accommodates identification of four distinct types of processor envisioned by the preferred embodiment.

One type of processor that may be identified is an MP Upgrade. An MP Upgrade is a CPU that, once initialized, is capable of operating in tandem with the OEM CPU 10 as a multiprocessing system. The tandem operation of the two CPUs is described in co-pending U.S. Patent Application, "*Method and Apparatus for Operating a Single CPU Computer System as a Multiprocessor System*". Bits 7 and 6 of the stored UPGRADE_ID data word for an MP Upgrade are 1 and Ø, respectively. The distinguishing feature of an MP upgrade is an incorporated interprocessor communications protocol for the OEM CPU and MP Upgrade to transparently share system resources. In order to accommodate an MP Upgrade, the OEM CPU 10 must also be MP ready. Furthermore, software/operating systems may use the upgrade family information contained in bits 0-3 to further classify the type of MP operation. For example, if the software determines that the upgrade family is the same as the host CPU then it will configure the system to operate in "Homogenous MP" mode. Likewise, if a software/operating system determines the upgrade processor family type to be different from the host CPU then the system may operate in "Heterogenous MP" mode. In this case, the operating system will load code compatible with the upgrade processor family type in a separate memory location where the upgrade processor can execute. In the case of the upgrade and host processor having different family types, it is possible that the operating system may determine it does not have the software compatible with the upgrade processor family type. In that situation, the operating system may choose not to start the upgrade processor and continue to operate in uniprocessor mode.

Another upgrade type, identified by a Ø and 1, respectively, in bits 7 and 6 of the UPGRADE_ID data word, can be characterized as a "Turbo" Upgrade. A Turbo Upgrade is a CPU which may be more advanced than the resident CPU but is not equipped for operating in tandem with the CPU 10 as a multiprocessing system. The presence of a Turbo Upgrade in an upgrade socket will cause the resident CPU 10 to shut down, leaving the Turbo processor to operate as the computer system's CPU.

Turbo Upgrades and MP Upgrades can both be thought of as being CPU upgrades. That is, both are complete CPUs capable of operating the host computer system. Each may have more functionality and better performance than the resident CPU 10, but at a minimum, each type is capable of operating alone as the system's CPU.

Another type of upgrade is the "accelerator" or N Upgrade. An N Upgrade is one that is not a complete CPU capable of executing the full instruction set of the host CPU 10. Such N Upgrades include the math coprocessors and graphics processors described above. Accelerator upgrades store a 1 and 1 in bits 7 and 6 of the UPGRADE_ID word. Even though these are non-compatible in the sense that they are not complete CPUs, in order to operate with the present invention they still must incorporate aspects of the present invention for interprocessor communications as well as store the UPGRADE_ID data word described above.

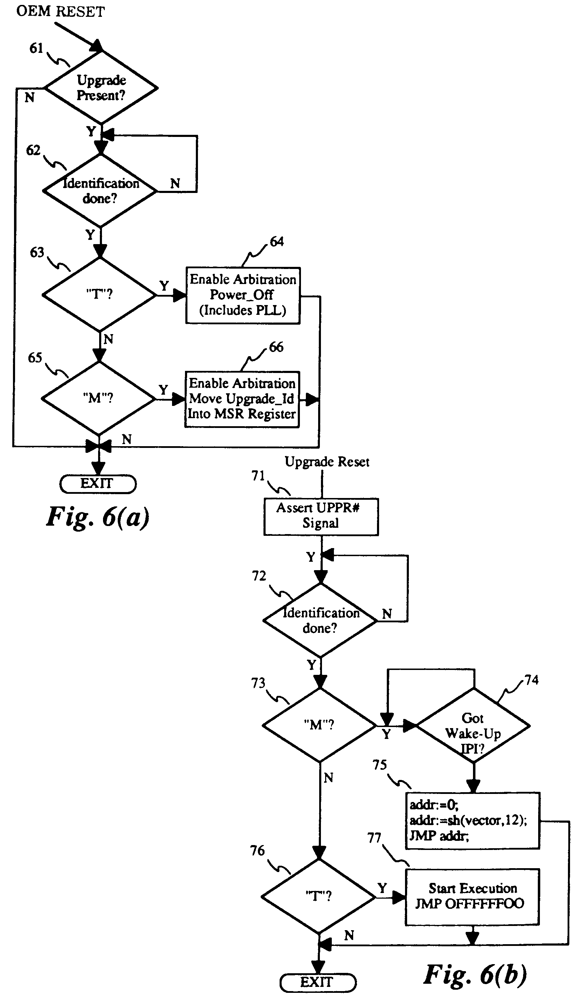

**Figure 5** illustrates the circuitry for implementing one embodiment of the hardware identification engine used for passing the UPGRADE_ID data word between processors. For the process of supplying the UPGRADE_ID, the PHIT# line 41 is used for serially conveying the data between processors. The identification engine is based on an 8-bit shift register 51. The upgrade processor shifts its UPGRADE_ID word into the OEM CPU 10. On completion of this process the identification engine reverts the communication line 41 to its other purpose. It should be noted that the resident CPU 10 as well as the upgrade processor 31 should be equipped with this circuitry to implement the following protocol.

The communication protocol between the upgrade processor 31 and the OEM CPU 10 is synchronous and serial with 1 start bit, no stop bits, and 8 data bits. Order of data transmission is ascending bit Ø (LSB) is sent first, bit 7 (MSB) is sent last. The handshake communication takes place on every deassertion of RESET to the two processors. It should be understood that future processors may need to transmit more identifying information. Thus the number of data bits transmitted for the handshake may vary.

The circuit comprises an 8-bit shift register 51 called the UPGRADE_ID_MSR. In the preferred embodiment this register is mapped to the processor's private register space at address 0x14. The preferred embodiment processor is compatible with the Intel Pentium® Processor instruction set. The value in the register can be accessed by software by using the RDMSR instruction from that instruction set. Other microprocessor instruction sets provide equivalent means to read a value from a known address.

During the assertion of RESET, the Upgrade_ID to be transmitted is loaded in parallel into the 8-bit shift register in the upgrade processor. The 3-bit counter 52 is set to "Ø" and the flag flip-flop 53 is set to indicate that the boot-up handshake should occur.

A processor's identity as an OEM or upgrade is determined at the time of manufacturing. At the time of system boot-up the shift register 51, counter 52 and flag flip-flop 53 are clocked by the external processor clock (BCLK). The signal MRM is in logic "high" state for an OEM processor and "low" for an upgrade. For an OEM processor, the logic "high" state of the MRM signal causes the bi-directional buffers on signal PHIT# (41) to be configured as input. Similarly, a logic "low" level MRM signal for the upgrade CPU configures the bi-directional buffers on signal line PHIT#(41) as output.

After RESET is deasserted, the upgrade processor 31 sends out the start bit by pulling PHIT# (41) "low" for 1 clock cycle. This is followed by shifting out the contents of the 8-bit shift register 51 one bit at a time. Bit Ø is shifted out first and bit 7 last. The 3-bit counter keeps track of the number of bits shifted out and after the last bit, it asserts the signal DONE. This resets the flag flip-flop 53 and reverts the communication line PHIT#(41) to its other purpose.

On the CPU 10 side of the transaction, after the deassertion of RESET, the CPU waits for the start bit. Once the start bit from the upgrade processor is recognized (PHIT# goes low), the next 8 bits are clocked into the CPU 10's 8-bit shift register. Once again, the CPU's counter indicates completion of the transfer and further loading of the register is disabled. The flag flip-flop 53 is then reset and the transfer process is complete.

The above description of the exchange of the upgrade information has been illustrated in the case where the information is serially propagated between processors. In an alternative embodiment, a plurality of signal lines may be used between the upgrade socket and the resident CPU to provide for the parallel propagation of the upgrade information to the CPU.

Referring now to **Figures 6(a)** and **6(b)** the method of operation of the present invention will now be described. **Figure 6(a)** illustrates a flow chart of the operation of the OEM CPU 10 during boot-up while **Figure 6(b)** shows the procedure of an upgrade processor 31 if one is present in upgrade socket 30. As described above, when an upgrade processor is present in upgrade socket 30 the UPPR# signal line 45 is used to indicate the upgrade's presence. In the case of the preferred embodiment the line is pulled to a "low" logic level. At step 61 after RESET, the OEM processor 10 detects for the presence of an upgrade. If no upgrade is present the OEM processor skips the remainder of the boot-up handshake protocol. If an upgrade processor 31 is present, it will supply its UPGRADE_ID data word to the OEM CPU 10 by means of the identification engine as described with respect to **Figure 5**.

Once the OEM Processor 10 has completed receiving the identification of upgrade processor 31 at step 62 it will act according to the type of upgrade present. For each kind of upgrade the OEM CPU 10 will behave differently depending upon the type of upgrade present. If at decision box 63 the OEM CPU determines from the UPGRADE_ID of the upgrade processor that the processor is a Turbo processor then at step 64 the OEM processor transfers control to the Turbo processor when it is ready to take over, before turning itself off. The process of the Turbo processor taking over the bus involves enabling the Dual-Processor arbitration mechanism. This mechanism is disabled during RESET which results in the OEM processor having the Current Master status on the bus. When the processor in upgrade socket 30 is a Turbo, the OEM CPU 10 activates the arbitration mechanism, designating the upgrade as the Current Master. The upgrade processor being a Turbo at step 76 will thus remain the Current Master and at step 77 will start execution as the system's sole CPU with a jump (JMP) to the designated address for the Turbo processor.

When the processor in upgrade socket 30 is capable of operating in tandem with the OEM CPU 10 in a multiprocessing environment then at decision box 65, bits 7 and 6 of the UPGRADE_ID will be a 1 and a Ø, respectively. At step 66 the OEM CPU will enable the arbitration mechanism as described above. The OEM CPU will store the upgrade processor's UPGRADE_ID in shift register 51. If the upgrade processor is a multiprocessing upgrade at decision box 73 then at step 74 the upgrade processor will initiate a wait-loop. The upgrade processor will remain in this loop until it receives an interprocessor interrupt called "start up IPI" from the OEM CPU 10. The OEM CPU, based upon the type of processor present in the upgrade socket 30 will send an interrupt over the private bus to the upgrade processor. This interrupt will wake-up the upgrade and provide a vector field identifying a starting address for the upgrade. The vector field is 8-bits long and specifies the base address of a 4KB page in the lowest 1 Meg. address space. For example, a vector of 0xbd specifies the 32-bit boot-up memory address of 0x000bd000. The boot-up address is used to initialize the Segment Description Table for the code segments as follows:
(1) The code segment base is set to the boot-up memory address.
(2) The code segment limit is set to 64KB.
(3) The code segment selector is set to the boot-up memory address divided by 16.

Both the current privilege level and the instruction pointer are set to Ø.

At step 75, the upgrade will wake up and prefetch its first instruction from the base address of the specified 4KB page.

An interprocessor boot-up handshake method and apparatus have been described. Although the present invention has been described in terms of various embodiments, it will be appreciated by those skilled in the art that various modifications and alterations might be made without departing from the spirit and scope of the present invention. The invention should, therefore, be measured in terms of the claims which follow.

## Claims

1. In a computer system having a first central processing unit, a memory bus in communication with said central processing unit, and an upgrade socket in communication with said central processing unit over a communications signal path, an upgrade processor for use said computer system comprising:
a memory element for storing identification information about said upgrade processor; and
means for signaling over said communications signal path the presence of said upgrade processor in said upgrade socket to said central processing unit,
said memory element providing said identification information to said central processing unit over said communications signal path when said upgrade processor's presence has been detected by said central processing unit.

2. The upgrade processor of claim 1 wherein said memory bus comprises a plurality of signal lines, said upgrade processor utilizing one of said plurality of signal lines as said communications signal path for serially providing said identification information to said central processing unit.

3. The upgrade processor of claim 1 wherein said memory bus comprises a plurality of signal lines, said upgrade processor utilizing said memory bus as said communications signal path to provide said identification information in parallel to said central processing unit.

4. The upgrade processor of claim 1 wherein said identification information is provided serially to said central processing unit over said communications signal path.

5. The upgrade processor of claim 1 wherein said identification information is provided in parallel to said central processing unit over said communications signal path.

6. The upgrade processor of claim 1 wherein said memory element comprises a shift register responsive to a clock signal provided by said computer system, said shift register shifting said identification information to said central processing unit over said communications signal path.

7. The upgrade processor of claim 6 further comprising a counter responsive to said clock signal, said counter for counting clock cycles equivalent to the number of bits to be transferred from said shift register, said counter providing a DONE signal indicating when said identification information transfer is complete.

8. The upgrade processor of claim 7 further comprising:
bi-directional buffers which may be configured for transmitting or receiving over said communications signal path; and
a flag flip-flop responsive to a signal indicating that said upgrade processor is an upgrade processor, said flag flip-flop being coupled to said counter,
said flag flip-flop for controlling said bi-directional buffers to be output drivers until said counter provides said DONE signal.

9. The upgrade processor of claim 7 wherein said shift register is an 8-bit shift register and said counter is a 3-bit counter.

10. The upgrade processor of claim 1 wherein said means for signaling the presence of said upgrade processor comprises a resistor for pulling the signal value on a signal line coupling said central processing unit and said upgrade socket.

11. In a computer system having a central processing unit, and a memory bus in communication with said central processing unit, an apparatus for utilizing said computer system with an upgrade processor comprising:
an upgrade socket for receiving an integrated circuit package;
a communications signal path for coupling said central processing unit to said upgrade socket for providing for the exchange of signals between said central processing unit and an upgrade processor when an upgrade processor is present in said upgrade socket;
a memory element incorporated in said upgrade processor for storing identification information about said upgrade processor, said upgrade processor providing said identification information to said central processing unit over said communications signal path.

12. The apparatus of claim 11 wherein said communications signal path comprises:
a first signal line for indicating the presence of said upgrade processor in said upgrade socket to said central processing unit; and
a second signal line for serially conveying said identification information from said upgrade processor to said central processing unit.

13. The apparatus of claim 11 wherein said communications signal path comprises a plurality of signal lines for conveying said upgrade information in parallel from said upgrade processor to said central processing unit.

14. The apparatus of claim 12 wherein said memory element comprises a shift register for serially shifting said identification information over said second signal line.

15. The apparatus of claim 14 wherein said shift register is responsive to a clock signal provided by said computer system, said apparatus further comprising a counter responsive to said clock signal, said counter for counting clock cycles equivalent to the number of bits to be transferred from said shift register, said counter providing a DONE signal indicating when said identification information transfer is complete.

16. The apparatus of claim 15 further comprising:
bi-directional buffers incorporated on said upgrade processor which may be configured for transmitting or receiving over said communications signal path; and
a flag flip-flop incorporated on said upgrade processor responsive to a signal indicating that said upgrade processor is an upgrade processor, said flag flip-flop being coupled to said counter,
said flag flip-flop for controlling said bi-directional buffers to be output drivers until said counter provides said DONE signal.

17. The apparatus of claim 11 wherein said computer system configures itself according to the type of upgrade processor present in said upgrade socket.

18. In a computer system having a central processing unit, an upgrade socket for housing an upgrade processor, and a communications signal path coupling said central processing unit to said upgrade socket, the improvement to said central processing unit comprising:
means for detecting the presence of an upgrade processor in said upgrade socket; and
a memory element for receiving identification information over said communications signal path from an upgrade processor when one is present in said upgrade socket.

19. The improvement of claim 18 wherein said communications signal path comprises:
a first signal line for indicating the presence of said upgrade processor in said upgrade socket to said central processing unit; and
a second signal line for serially conveying said identification information from said upgrade processor to said central processing unit.

20. The apparatus of claim 18 wherein said communications signal path comprises a plurality of signal lines for conveying said upgrade information in parallel from said upgrade processor to said central processing unit.

21. The improvement of claim 19 wherein said memory element comprises a shift register for serially receiving said identification information over said second signal line from said upgrade processor.

22. The improvement of claim 21 wherein said shift register is responsive to a clock signal provided by said computer system, said improvement further comprising a counter responsive to said clock signal, said counter for counting clock cycles equivalent to the number of bits to be transferred from said shift register, said counter providing a DONE signal indicating when said identification information transfer is complete.

23. The improvement of claim 22 further comprising:
bi-directional buffers which may be configured for transmitting or receiving over said communications signal path; and
a flag flip-flop responsive to a signal indicating that said central processing unit is an central processing unit, said flag flip-flop being coupled to said counter,
said flag flip-flop for controlling said bi-directional buffers to be output drivers until said counter provides said DONE signal.

24. The improvement of claim 23 wherein said shift register is an 8-bit shift register and said counter is a 3-bit counter.

25. The improvement of claim 18 wherein said central processing unit configures said computer system according to the type of processor present in said upgrade socket.

26. In a computer system having a first central processing unit (CPU), a memory bus coupled to said first CPU, at least a first upgrade socket for receiving a first upgrade processor and a communications signal path coupling said first CPU to said first upgrade socket, a method of identifying said first upgrade processor to said first CPU comprising the steps of:
a) storing an identification data word in said first upgrade processor, said data word comprising information about said first upgrade processor;
b) supplying said identification data word from said first upgrade processor to said first CPU over said communications signal path; and
c) initializing said computer system according to the type of upgrade processor present in said first upgrade socket, if any.

27. The method of claim 26 wherein said computer system further comprises an additional plurality of upgrade sockets for receiving an additional plurality of upgrade processors, said communications signal path further being coupled to each of said plurality of upgrade sockets, said method further comprising:
repeating steps a) and b) for each of said plurality of upgrade processors; and
in step c) initializing said computer system according to the type of upgrade processors present in each of said upgrade sockets, if any.

28. The method according to claim 26 wherein before said supplying step said method further comprises the step of said first upgrade processor indicating its presence to said first CPU over said communications signal path.

29. The method according to claim 28 wherein if said first CPU determines said first upgrade processor is a compatible upgrade processor incapable of multiprocessing with said first CPU but capable of at least executing the complete instruction set as said first CPU, said initialization step c) comprises the steps of:
said computer system disabling said first CPU; and
said computer system operating with said first upgrade processor as said computer system's primary CPU.

30. The method according to claim 28 wherein if said first CPU determines said first upgrade processor is a compatible upgrade and is capable of multiprocessing with said first CPU, said computer system further comprising a private communications bus coupling said first CPU and said first upgrade processor, said initialization step c) comprising the step of initializing said computer system to perform as a multiprocessing system.

31. The method according to claim 28 wherein if said first CPU determines said first upgrade processor is not a compatible upgrade, said initialization step c) comprising the steps of:
said first CPU requesting over said communications signal path the desired memory location for said first upgrade processor's microcode;
said first CPU loading said microcode at said desired location; and
said first CPU waking up said first upgrade processor.

32. The method according to claim 28 wherein if said first CPU determines said first upgrade socket houses a processor incapable of using said communications signal path properly, said method further comprises the step of disabling the upgrade processor in said upgrade socket.

33. In a computer system having a central processing unit (CPU), a memory bus coupled to said CPU, an upgrade socket for receiving an integrated circuit package, and a plurality of signal lines coupled between said upgrade socket and said CPU, a method for utilizing said computer system comprising the steps of:
providing an upgrade processor in said upgrade socket;
indicating the presence of said upgrade processor to said CPU;
conveying identification information from said upgrade processor to said first CPU;
if said upgrade processor is a Turbo processor, initializing said computer system with said upgrade processor as the system's CPU and disabling said first CPU; and
if said upgrade processor is a multiprocessing-ready processor, initializing said computer system with said first CPU and said upgrade processor operating in tandem as a dual-processing system.

34. The method of claim 33 wherein said plurality of signal lines includes a first signal line held in a first signal state, said indicating the presence step comprising the step of said upgrade processor driving said first signal line to a second signal state.

35. The method of claim 34 wherein said plurality of signal lines further includes a second signal line, said conveying identification information step comprising serially propagating said stored identification information from said upgrade processor to said first CPU over said second signal line.

36. The method of claim 34 wherein said conveying identification information step comprises propagating said stored identification information in parallel from said upgrade processor to said first CPU over said plurality of signal lines.

37. The method of claim 33 wherein said initializing step if said upgrade processor is a Turbo processor comprises the steps of:
granting the memory bus to said upgrade processor; and
shutting down said first CPU.

38. The method of claim 33 wherein said initializing step if said upgrade processor is a multiprocessing-ready processor comprises the steps of:
activating a multiprocessing arbitration mechanism in said first CPU;
sending an interprocessor interrupt to said upgrade processor with a vector identifying a starting memory location for said upgrade processor; and
waking up said upgrade processor to operate in tandem with said first CPU.
